# FASCICULE DE BREVET EUROPEEN

(11) **EP 2 067 757 B1**
(45) Date de publication et mention de la délivrance du brevet: **02.01.2013**
(21) Numéro de dépôt: 08169758.3
(22) Date de dépôt: 24.11.2008
(51) Int. Cl.: C04B 35/83, F16D 69/02

(54) **Procédé de fabrication de pièces en matériau composite à renfort en fibres de carbone**
Herstellungsverfahren von Verbundwerkstoffteilen mit Karbonfaserverstärkung
Method of manufacturing parts from a composite material with carbon fibre reinforcements

(30) Priorité: 30.11.2007 FR 0759465
(43) Date de publication de la demande: 10.06.2009
(73) Titulaire: Messier-Bugatti-Dowty, 78140 Velizy Villacoublay (FR)
(72) Inventeur: Bouchard, Eric, 38080 Four (FR); Lherm, Eric, 01800 Rignieux le Franc (FR)
(74) Mandataire: Joly, Jean-Jacques

(56) Documents cités:
- EP-A- 1 424 423
- WO-A-2006/129040
- FR-A- 2 616 779
- US-A- 5 405 560
- US-A- 5 846 611

## Description

### Arrière-plan de l'invention

La présente invention concerne la réalisation de pièces en matériau composite ayant un renfort en fibres de carbone densifié par une matrice formée au moins en partie par un processus de type infiltration chimique en phase gazeuse, ou CVI ("Chemical Vapour Infiltration").

Un domaine particulier, mais non exclusif, d'application de l'invention est la réalisation de disques de frein en matériau composite carbone/carbone (C/C), notamment pour des freins aéronautiques comprenant un assemblage de disques coaxiaux alternativement stators et rotors. L'invention est toutefois applicable à la réalisation d'autres pièces en matériau composite C/C ainsi qu'à la réalisation de pièces en d'autres matériaux composites à renfort en fibres de carbone, notamment en matériaux composites à matrice céramiques (CMC) ou à matrice mixte carbone-céramique.

La densification de substrats poreux, tels que des substrats fibreux, par des processus de type CVI est bien connue.

Dans un processus CVI classique, les substrats à densifier sont placés dans un four. Une phase gazeuse réactionnelle est admise dans le four pour déposer le matériau constitutif de la matrice au sein de la porosité des substrats par décomposition d'un ou plusieurs constituants de la phase gazeuse ou par réaction entre plusieurs constituants, dans des conditions notamment de température et de pression déterminées.

Une difficulté majeure des processus de type CVI est de minimiser le gradient de densification au sein des substrats pour obtenir des pièces avec le moins possible d'inhomogénéité de propriétés dans leur volume.

En effet, le dépôt de la matrice a tendance à se former préférentiellement dans les parties superficielles des substrats rencontrées en premier par la phase gazeuse réactionnelle. Il en résulte un appauvrissement de la phase gazeuse qui parvient à diffuser au coeur des substrats et une obturation prématurée de la porosité des parties superficielles du substrat qui réduit progressivement les possibilités de diffusion à coeur de la phase gazeuse. Un gradient de densification s'établit par conséquent entre les parties superficielles et le coeur des substrats.

C'est pourquoi, notamment pour la réalisation de pièces épaisses, il est en pratique nécessaire, après avoir atteint un certain stade de densification, d'interrompre le processus pour retirer les substrats partiellement densifiés afin de réaliser un usinage de surface, ou écroûtage, permettant de ré-ouvrir la porosité superficielle. La densification peut alors être poursuivie, avec un accès plus aisé au coeur des substrats pour la diffusion de la phase gazeuse réactionnelle. Dans le cas par exemple de la réalisation de disques de freins, on procède généralement à au moins deux cycles de densification CVI (cycles I1 et I2) séparés par un écroûtage. En pratique, on observe toutefois un gradient de densification sur les pièces finalement obtenues.

Il est certes connu, pour éviter la génération d'un gradient de densification et éviter éventuellement les opérations d'écroûtage, de mettre en oeuvre un procédé de densification CVI à gradient de température, c'est-à-dire en chauffant les substrats de façon non uniforme. Un chauffage non uniforme par couplage direct entre un inducteur et un ou plusieurs substrats annulaires à densifier est décrit dans les documents US 5 846 611 et EP 0 946 461. Le dépôt de la matrice dans les zones des substrats les moins facilement accessibles par la phase gazeuse est favorisé en portant ces zones à une température plus élevée que celle d'autres parties des substrats. Toutefois, cette technique est limitée à certaines formes de substrats et à certains arrangements des chargements de substrats dans le four.

Il a été proposé dans le document US 5 405 560 de favoriser l'accès de la phase gazeuse réactionnelle au sein de substrats constitués par des préformes fibreuses annulaires pour disques de frein en matériau composite C/C en ménageant des passages en forme de trous s'étendant à travers les préformes, entre leurs faces opposées. Ces trous sont ménagés par l'introduction d'aiguilles qui repoussent les fibres des préformes sans les endommager. Lors de la densification CVI, les trous offrent à la phase gazeuse un trajet raccourci pour atteindre les parties centrales des préformes. Le document parallèle FR 2 616 779 mentionne certes aussi l'éventualité d'une formation de trous par un fluide sous pression partiellement destructeur des fibres, mais recommande d'éviter un endommagement des fibres.

Par contraste, dans le document WO 2006/129040, il est proposé de réaliser des trous dans un substrat fibreux par enlèvement de matière avec rupture des fibres, par exemple par usinage par jet d'eau sous haute pression ou par usinage mécanique, l'objet étant de conserver un arrangement des fibres sensiblement non modifié, notamment au niveau de la paroi des trous. La densification d'un tel substrat par un processus de type CVI s'avère quasiment uniforme, la réduction du gradient de densification étant plus efficace qu'avec le procédé du document US 5 405 560.

Des essais effectués par la déposante ont montré que l'efficacité de la perforation du substrat fibreux en vue de la réduction du gradient de densification est liée à la surface ouverte du substrat, c'est-à-dire, en considérant une face du substrat où débouchent les trous, le pourcentage de surface occupée par les trous par rapport à la surface totale de cette face. Plus précisément, une augmentation de la surface ouverte se traduit par une diminution du gradient de densification.

Une augmentation de surface ouverte peut être obtenue par un accroissement de la section transversale des trous, pour une densité de trous donnée, c'est-à-dire un nombre de trous donné par unité de surface sur la face du substrat où les trous débouchent.

L'accroissement de la section transversale des trous présente des inconvénients au-delà d'un certain seuil. En effet, le matériau composite obtenu est plus hétérogène. De plus, au moins pour certaines applications, la présence de trous non obturés lors de la densification du substrat affecte les propriétés de la pièce réalisée. Ainsi, dans le cas d'un disque de frein, des essais effectués par la déposante ont montré qu'au-delà d'un certain seuil, la présence de trous non obturés dans le matériau composite se traduit par une usure sensiblement plus importante du matériau composite. Cela peut s'expliquer par l'action des bords des trous lors du frottement du disque de frein sur un autre disque. Un bouchage des trous après densification du substrat peut être envisagé. C'est ce qui est mentionné dans le document précité US 5 405 560 qui préconise la formation de trous d'un diamètre compris entre 0,5 mm et 5 mm. Le bouchage des trous nécessite une opération supplémentaire qui alourdit les coûts de fabrication et n'empêche pas le matériau d'être sensiblement inhomogène.

Une augmentation de la surface ouverte par un accroissement de la densité et donc du nombre des trous pose le problème de la réalisation d'un nombre élevé de trous de section transversale relativement réduite. La déposante a établi que pour obtenir un résultat significatif en termes de réduction de gradient, et donc de durée de densification, tout en conservant une usure analogue à celle de disques de frein aéronautique fabriqués à partir de substrats non troués, la formation de plus de 1 000 trous à la surface d'un disque de diamètre 20 pouces était nécessaire. Cela est difficilement envisageable avec les techniques décrites dans les documents US 5 405 560 et WO 2006/129040 si l'on veut que la balance entre gain en terme de densification et augmentation des coûts de fabrication pour la formation des trous reste favorable.

### Objet et résumé de l'invention

L'invention a pour but de proposer un procédé de fabrication de pièces en matériau composite ayant un renfort en fibres de carbone densifié par une matrice au moins partiellement par un processus de type CVI, procédé permettant de réduire le gradient de densification sans alourdir les coûts de fabrication de façon importante.

Ce but est atteint grâce à un procédé comprenant les étapes de :
- réalisation d'une préforme fibreuse cohérente en fibres de carbone présentant des trous formés à partir d'au moins une première face de la préforme, et
- densification de la préforme par dépôt au sein de celle-ci d'un matériau constitutif de la matrice et obtenu par un processus du type infiltration chimique en phase gazeuse,
procédé dans lequel, conformément à l'invention :
- les trous sont formés par pénétration simultanée d'une pluralité d'aiguilles à barbes sensiblement parallèles entre elles et présentant à leur surface des barbes propres à sectionner une majorité des fibres rencontrées et à transférer des fibres sectionnées dans la préforme, la pénétration simultanée des aiguilles étant réalisée par déplacement d'un support portant les aiguilles, et
- les aiguilles sont choisies avec une section transversale permettant d'obtenir, dans la préforme en fibres de carbone, des trous ayant en section transversale une dimension moyenne comprise entre 50 microns et 500 microns.

Le procédé est remarquable en ce qu'il permet la réalisation simultanée d'un grand nombre de trous par insertion d'aiguilles à barbes s'étendant sensiblement parallèlement les unes aux autres. Un autre aspect remarquable du procédé est qu'en dépit d'une modification de l'arrangement des fibres le long des parois des trous en comparaison avec l'arrangement avant perforation, des essais effectués montrent de très bons résultats en termes de densification.

Selon une particularité du procédé, la préforme fibreuse en fibres de carbone est réalisée avec une densité moyenne de trous, mesurée sur ladite première face, comprise entre 0,25 trou/cm² et 16 trous/cm².

Selon une autre particularité du procédé, la préforme fibreuse en fibres de carbone est réalisée avec une surface ouverte mesurée sur ladite première face représentant entre 0,025 % et 2 % de la surface totale de ladite première face.

Avantageusement, on fait pénétrer les aiguilles à barbes sur une distance correspondant à au moins la moitié de la dimension de la préforme mesurée parallèlement aux trous entre ladite première face de la préforme et une face opposée à celle-ci.

Lorsque la réalisation de la préforme fibreuse en fibres de carbone comprend la réalisation d'un substrat fibreux cohérent en fibres de précurseur de carbone et la carbonisation du substrat fibreux pour transformer le précurseur de carbone en carbone, les trous peuvent être formés après carbonisation du substrat fibreux ou avant carbonisation. Dans ce dernier cas, il est nécessaire de prendre en compte, pour la dimension des trous en section transversale, le retrait se produisant lors de la carbonisation.

Lorsque la réalisation de la préforme fibreuse en fibres de carbone comprend la réalisation d'un substrat fibreux cohérent directement à partir de fibres de carbone éventuellement suivie d'un traitement thermique réalisant une carbonisation supplémentaire du substrat fibreux, les trous peuvent être formés dans le substrat fibreux avant ou après ce traitement thermique. Dans le premier cas, pour obtenir une section transversale souhaitée des trous, il n'est pas nécessaire de tenir compte d'un retrait puisque le traitement thermique de carbonisation supplémentaire n'induit pas le retrait sensible.

Selon un mode de mise en oeuvre particulier du procédé, les trous peuvent être formés au cours de la réalisation du substrat fibreux en fibres de précurseur de carbone, ou au cours de la réalisation du substrat fibreux à partir de fibres de carbone. Lorsque la réalisation du substrat fibreux comporte l'aiguilletage de strates fibreuses superposées, la formation des trous peut être simultanée avec l'aiguilletage, par exemple en montant sur un même support les aiguilles à barbes utilisées pour la formation des trous et les aiguilles utilisées pour l'aiguilletage.

Avantageusement, lorsque le procédé est utilisé pour la fabrication de disques de frein en matériau composite carbone/carbone, la densification de la préforme fibreuse par infiltration chimique en phase gazeuse est réalisée sans procéder à un écroûtage de la surface de la préforme avant la fin de la densification. Ainsi, le procédé est remarquable en ce qu'il peut permettre d'obtenir une densité désirée du matériau composite pour un disque de frein sans avoir à réaliser plusieurs cycles de densification séparés par une ou plusieurs opérations d'écroûtage destinées à re-ouvrir la porosité de surface de la préforme.

L'invention vise encore un disque de frein en matériau composite à renfort en fibres de carbone, tel qu'obtenu par le procédé défini ci-avant.

### Brève description des dessins

L'invention sera mieux comprise à la lecture de la description faite ci-après, à titre indicatif mais non limitatif, en référence aux dessins annexés sur lesquels :
- la figure 1 indique des étapes successives de réalisation d'une pièce en matériau composite selon un premier mode de réalisation d'un procédé conforme à l'invention ;
- la figure 2 montre un montage permettant la formation simultanée d'une pluralité de trous dans un substrat fibreux ;
- la figure 3 est une vue de détail d'une aiguille utilisée dans le montage de la figure 2 ;
- la figure 4 est une vue en coupe transversale selon le plan IV-IV de la figure 3 ;
- la figure 5 est une vue de détail d'une variante d'aiguille utilisable dans le montage de la figure 2 ;
- la figure 6 est une vue en coupe transversale de l'aiguille de la figure 5 ;
- la figure 7 est une vue schématique d'une préforme fibreuse annulaire du disque de frein dans laquelle des trous ont été formés ;
- les figures 8 à 11 sont des vues en coupe partielles montrant des variantes de formation de trous débouchant sur au moins une face principale d'un substrat fibreux constituant une préforme fibreuse annulaire de disque de frein ;
- la figure 12 montre schématiquement un disque de frein obtenu après densification de type CVI et usinage final, avec une préforme telle que celle de la figure 7 ;
- la figure 13 est une microphotographie montrant l'ouverture d'un trou formé dans une préforme fibreuse annulaire de disque de frein au moyen d'une aiguille telle que celle des figures 3 et 4 ;
- la figure 14 est une microphotographie montrant une coupe longitudinale d'un trou similaire à celui de la figure 13 ;
- la figure 15 indique des étapes successives de réalisation d'une pièce en matériau composite selon un deuxième mode de réalisation d'un procédé conforme à l'invention ; et
- la figure 16 illustre un montage permettant de réaliser des trous dans un substrat en fibres de précurseur de carbone selon une variante du deuxième mode de réalisation.

### Description détaillée de modes de réalisation de l'invention

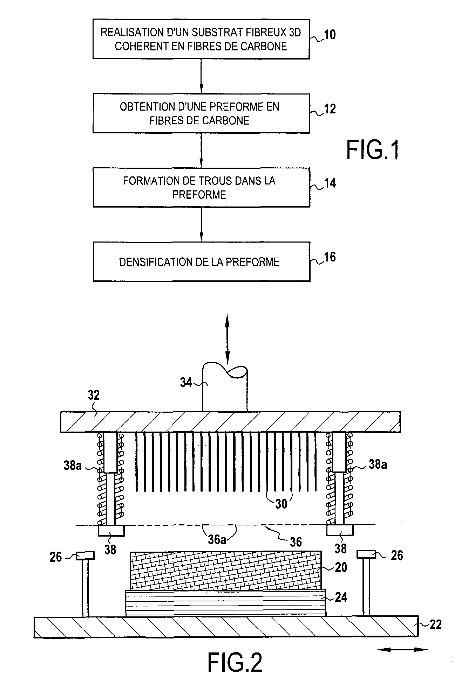

Une première étape 10 du procédé de la figure 1 consiste à réaliser un substrat fibreux tridimensionnel (3D) cohérent en fibres de carbone.

Par substrat fibreux 3D cohérent, on entend ici un substrat susceptible d'être manipulé sans perdre sa cohésion mais pouvant présenter une certaine souplesse.

Diverses techniques de réalisation de substrats fibreux 3D cohérents sont bien connues.

Il est possible de partir d'éléments fibreux unidimensionnels (1D) tels que des fils ou câbles qui sont utilisés pour former un substrat 3D directement par tissage, tricotage ou tressage tridimensionnels.

On peut aussi partir de textures fibreuses bidimensionnelles (2D) telles que des tissus, tricots, tresses à plat, feutres minces, nappes unidirectionnelles (UD) formées de fils ou câbles parallèles entre eux, ou encore des nappes multidirectionnelles (nD) formées de nappes UD superposées dans des directions différentes et liées entre elles par aiguilletage léger ou par couture. Des strates formées de telles textures fibreuses 2D sont superposées à plat ou drapées sur une forme et sont liées entre elles par aiguilletage, par couture ou par implantation de fils à travers les strates pour obtenir un substrat fibreux 3D. Un mode de réalisation de substrats fibreux 3D destinés à la formation de préformes fibreuses annulaires épaisses pour des disques de frein en matériau composite est décrit par exemple dans le document US 5 792 715. Selon ce mode de réalisation des strates découpées dans des nappes nD sont superposées et liées les unes aux autres par aiguilletage au fur et à mesure de leur superposition.

Le substrat fibreux peut être réalisé à partir de fibres de carbone ou à partir de fibres de précurseur de carbone qui peuvent être plus aptes à supporter diverses opérations textiles pour la réalisation du substrat fibreux 3D. Dans ce dernier cas, la transformation du précurseur en carbone est réalisée après formation du substrat fibreux, par traitement thermique.

Une préforme en fibres de carbone ayant une forme voisine d'une pièce à réaliser peut être obtenue (étape 12) :
- directement sous forme d'un substrat fibreux réalisé à partir de fibres de carbone,
- par découpe dans un substrat fibreux réalisé à partir de fibres de carbone,
- directement par carbonisation d'un substrat fibreux réalisé à partir de fibres de précurseur de carbone,
- par carbonisation d'un substrat fibreux réalisé à partir de fibres de précurseur de carbone et découpe dans le substrat fibreux carbonisé,
- par découpe d'une préforme dans un substrat fibreux réalisé à partir de fibres de précurseur de carbone et carbonisation de la préforme.

Dans les deux premiers cas, après réalisation d'un substrat fibreux à partir de fibres de carbone, un traitement thermique haute température (THT) peut être réalisé à une température supérieure à celle atteinte lors de la carbonisation afin, de façon en soi connue, de modifier des propriétés des fibres et éventuellement d'éliminer des impuretés contenues dans celles-ci.

Dans le cas de substrats fibreux 3D destinés à la formation de préformes fibreuses annulaires pour des disques de frein en matériau composite, il est usuel de réaliser des substrats fibreux 3D à partir de fibres de précurseur de carbone, tel que par exemple du polyacrilonitrile (PAN) préoxydé. Des préformes de disque de frein en fibres de carbone sont ensuite obtenues par découpe de parties en forme de disques dans le substrat fibreux 3D en fibres de précurseur de carbone et carbonisation, la dimension des parties découpées étant déterminée en fonction de celle des préformes à obtenir et du retrait produit par la carbonisation.

Une étape suivante (14) du procédé de la figure 1 consiste à former des trous dans la préforme en fibres de carbone afin de faciliter l'accès à une phase gazeuse réactionnelle au coeur de la préforme lors d'une densification ultérieure de celle-ci par un processus de type CVI.

En variante, lorsque la préforme est obtenue par découpe dans un substrat fibreux en fibres de carbone, les trous peuvent être formés dans le substrat, avant découpe de la préforme.

En outre, lorsque le substrat fibreux est obtenu directement à partir de fibres de carbone, les trous peuvent être formés avant ou après carbonisation supplémentaire éventuelle.

Les trous sont formés par pénétration simultanée à travers au moins une face de la préforme, d'une pluralité d'aiguilles à barbes s'étendant sensiblement parallèlement les unes aux autres et présentant à leur surface des barbes propres à sectionner une majorité des fibres rencontrées et à transférer dans la préforme une partie des fibres sectionnées lors de la pénétration des aiguilles dans la préforme. En section transversale, la dimension des trous formés est choisie de préférence suffisamment grande pour permettre l'accès d'une phase gazeuse réactionnelle au coeur de la préforme sans obturation prématurée par le dépôt de la matrice lors de la densification, et pourra être d'autant plus grande que l'épaisseur de préforme traversée par les trous est plus grande.

Toutefois, cette dimension des trous doit rester limitée pour éviter de laisser subsister, après densification, des trous résiduels trop importants susceptibles d'affecter le comportement de la pièce réalisée, par exemple, dans le cas de disques de frein, susceptibles d'entraîner une usure importante prématurée. Dans ce dernier cas, la présence de trous résiduels de faible section est tolérable dans la mesure où ils sont bouchés rapidement par des particules produites par la friction.

Aussi, de préférence, la dimension moyenne des trous en section transversale est comprise entre 50 microns et 500 microns. Les trous n'ont pas nécessairement une forme circulaire régulière, en raison de la géométrie des aiguilles utilisées, de la direction des fibres et d'un retour partiel et non nécessairement régulier des fibres vers leur position d'origine après passage de l'aiguille. C'est pourquoi la dimension considérée ici n'est pas un diamètre des trous, mais une dimension moyenne en section transversale, qui est déterminée en mesurant la surface occupée par le trou sur la face à travers laquelle il est formé et en calculant le diamètre d'un cercle ayant même surface.

Il est important aussi d'avoir une distance entre trous suffisamment petite pour garantir un accès aisé de la phase gazeuse réactionnelle en toute zone de la préforme, mais sans multiplier le nombre de trous de façon exagérée pour ne pas affecter les propriétés mécaniques de la pièce réalisée ainsi que les propriétés tribologiques s'il s'agit de disques de frein.

C'est pourquoi la densité moyenne des trous est de préférence comprise entre 0,25 trou/cm² et 16 trous/cm², cette densité étant mesurée sur la ou chaque face de la préforme à travers laquelle les trous sont formés.

De préférence encore, pour les raisons déjà indiquées, on choisit de former les trous de manière à obtenir une surface ouverte comprise entre 0,025 % et 2 %, la surface ouverte étant la fraction de surface occupée par les trous sur la ou chaque face de la préforme à travers laquelle les trous sont formés.

La figure 2 montre un montage permettant la formation de trous dans une préforme 20 de disque de frein obtenue par découpe dans un substrat fibreux 3D en fibres de précurseur de carbone et carbonisation.

La préforme peut être une préforme annulaire par exemple obtenue par découpe dans un substrat fibreux. On peut aussi former les trous dans une préforme ayant une forme de disque complet dans lequel la partie centrale doit ultérieurement être retirée par découpe pour obtenir une préforme à densifier ayant une forme annulaire proche de celle du disque de frein à obtenir.

Une pluralité d'aiguilles 30 s'étendant verticalement et disposées en une ou plusieurs rangées sont fixées sur un support commun 32, ou planche à aiguilles de forme circulaire. La planche à aiguilles 32 est solidaire d'un organe 34 permettant d'imprimer à la planche à aiguilles un mouvement en translation vertical dans un sens et dans l'autre, par exemple un organe mobile d'une presse.

La préforme 20 est supportée horizontalement par une platine 22 mobile horizontalement, avec interposition d'une couche d'embase 24 dans laquelle les extrémités des aiguilles 30 peuvent pénétrer sans être endommagées. La couche d'embase 24 est par exemple en une structure alvéolée relativement rigide, telle qu'une mousse de carbone, ou en une préforme de disque sacrifiée en fibres de carbone. On pourrait aussi utiliser une platine 22 à trous, le pas des trous de la platine 22 et le pas et la direction de déplacement horizontal relatif éventuel entre la platine 22 et la planche 32 étant tels que chaque aiguille se trouve toujours au regard d'un trou de la platine 22 lors de son mouvement vertical.

Une plaque de débourrage 36 est supportée par les extrémités 38a, en forme de têtes, de tiges 38 qui s'étendent verticalement à partir de la face inférieure de la planche à aiguilles et sont portées par celle-ci, à l'extérieur de l'ensemble d'aiguilles 30. Les tiges 38 peuvent coulisser dans des trous formés dans la plaque 36. Des ressorts hélicoïdaux 38a sont montés autour des tiges 38, entre la planche à aiguilles 32 et la plaque de débourrage 36. La plaque de débourrage 36 présente des perforations 36a permettant le passage des aiguilles 30. Lorsque la planche à aiguilles 32 est abaissée, la plaque de débourrage 36 vient en appui sur des butées 26 portées par la platine 22 et les aiguilles pénètrent dans la préforme 20 en passant à travers les perforations 36a, les ressorts 38a étant comprimés. Le mouvement de descente des aiguilles est défini par la course de la presse.

Lorsque la planche à aiguilles est ensuite relevée, la plaque de débourrage 36 est maintenue en appui sur la préforme 20 par les ressorts 38a le temps nécessaire pour que les aiguilles sortent de la préforme.

Un cycle de formation de trous peut comprendre un ou plusieurs cycles de pénétration et retrait des aiguilles et peut permettre la formation simultanée de plusieurs centaines de trous. Les aiguilles 30 sont montées sur la planche à aiguilles 32 avec un espacement sensiblement régulier. On peut réaliser les trous en un seul cycle de pénétration et retrait des aiguilles pour une surface donnée de la préforme, le pas des aiguilles 30 sur la planche 32 reflétant alors celui des trous à former dans la préforme. On peut aussi réaliser les trous dans une surface donnée de la préforme en plusieurs cycles en déplaçant la préforme 20 horizontalement par mouvement de la platine 22 entre deux cycles. Le pas des aiguilles 30 sur la planche 32 est alors fonction de l'amplitude de déplacement de la préforme par rapport à la planche à aiguilles entre deux cycles et du pas des trous à former.

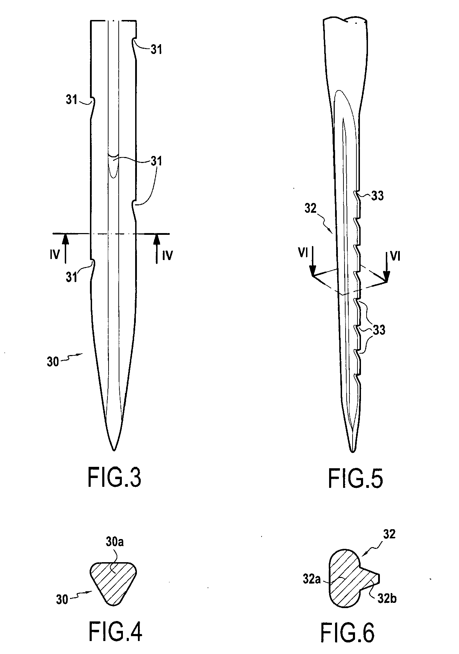

Les figures 3 et 4 sont des vues détaillées d'un exemple d'aiguille à barbes utilisable. L'aiguille 30 a une section travaillante 30a de forme sensiblement triangulaire avec arêtes arrondies le long desquelles sont formées des barbes 31. Les barbes sont formées par des évidements en forme de crochets et sont réparties sensiblement régulièrement le long de l'aiguille en étant formées successivement sur les trois arêtes. De telles aiguilles sont connues en elles-mêmes comme aiguilles dites aiguilles à feutrer utilisées pour l'aiguilletage de textures fibreuses. Lors de la pénétration de l'aiguille dans la préforme, les fibres rencontrées par les barbes 31 sont pour la plupart sectionnées et en partie transférées.

Les figures 5 et 6 sont des vues détaillées d'un autre type d'aiguille à barbes, l'aiguille 32 ayant une section travaillante 32a en forme de goutte et présentant une arête 32b le long de laquelle sont formées des barbes 33.

La dimension moyenne en section transversale des trous formés varie en fonction de la section travaillante des aiguilles, des caractéristiques des barbes formées sur les aiguilles, du nombre de pénétrations effectuées pour chaque trou, de la vitesse de frappe des aiguilles et des caractéristiques de la préforme à percer. Par section travaillante des aiguilles, on entend la section de la partie des aiguilles présentant des barbes. Dans tous les cas, pour obtenir un trou de section désirée, on choisit une aiguille ayant une section travaillante sensiblement supérieure pour tenir compte du fait que les fibres sont repoussées par l'aiguille lors de sa pénétration et ont tendance à revenir vers leur position d'origine après retrait de l'aiguille. Ainsi, par exemple, dans le cas de la formation de trous dans une préforme aiguilletée en fibres de carbone au moyen des aiguilles à feutrer des figures 2 et 3, on choisit des aiguilles ayant une section travaillante plusieurs fois supérieure à la section des trous à réaliser. Avec d'autres types de préforme, la section travaillante correspondant à une section de trous désirée peut être aisément déterminée expérimentalement.

La profondeur des trous formés varie en fonction de la distance de pénétration des barbes de l'aiguille dans la préforme et des caractéristiques de la préforme à percer. On notera qu'avec une aiguille telle que celle des figures 3 et 4, la longueur travaillante efficace pour la formation d'un trou ne s'étend pas jusqu'à la pointe de l'aiguille, les fibres n'étant pas durablement déplacées par la partie de l'aiguille qui s'étend entre la pointe de l'aiguille et la barbe la plus proche de la pointe.

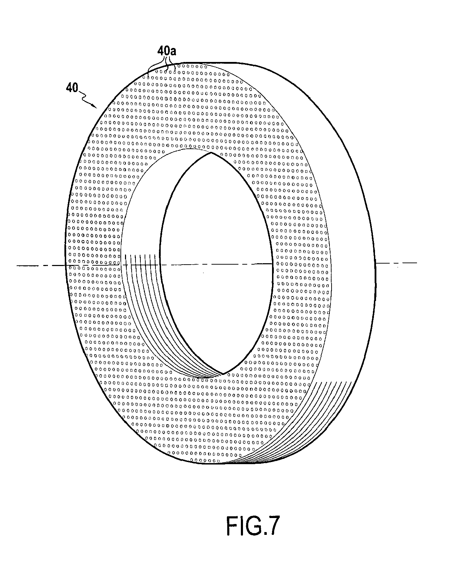

La figure 7 montre une préforme fibreuse annulaire 40 de disque de frein dans laquelle des trous 40a ont été formés. Les trous sont dans cet exemple distribués régulièrement selon un maillage de forme carrée. D'autres répartitions de trous pourront être choisies, par exemple selon un maillage hexagonal, le long de cercles concentriques, ...

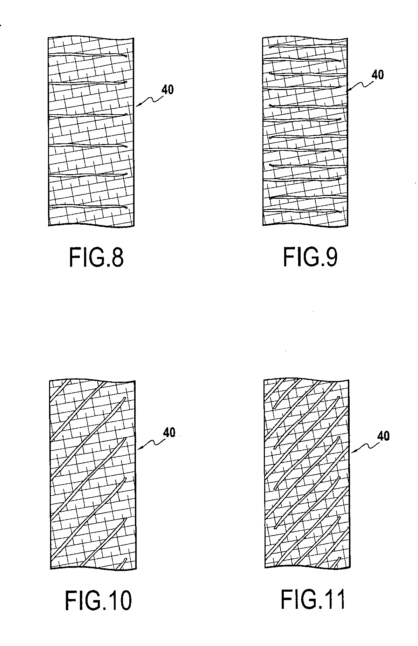

On peut prévoir que les trous sont des trous traversants débouchant sur les deux faces opposées de la préforme 40, ou quasi traversants, c'est-à-dire s'arrêtant à faible distance de la face de la préforme opposées à travers laquelle les trous sont formés, comme montré sur la figure 8. De tels trous sont obtenus en faisant traverser toute l'épaisseur ou pratiquement toute l'épaisseur de la préforme par la partie travaillante des aiguilles.

En variante, les trous formés dans la préforme 40 peuvent être des trous borgnes formés à partir de deux faces opposées de la préforme, comme illustré par la figure 9, les trous s'étendent alors sur une distance au moins égale à la moitié de l'épaisseur de la préforme mesurée entre ces deux faces. Avec un montage tel que celui de la figure 2, cela peut être obtenu en formant une première série de trous par pénétration des aiguilles à travers une première face de la préforme, sans traverser celle-ci et en formant une deuxième série de trous de façon similaire après avoir retourné la préforme.

Encore en variante, les trous formés dans la préforme peuvent s'étendre en biais en formant un angle non nul avec la normale à la face de la préforme à travers laquelle les aiguilles sont introduites. Avec un montage tel que celui de la figure 2, cela peut être obtenu en montant les aiguilles en biais sur la planche à aiguilles et en déplaçant celle-ci parallèlement aux aiguilles. De tels trous en biais peuvent être quasi traversants ou de profondeur limitée comme montré sur les figures 10 et 11.

Après formation des trous dans la préforme en fibres de carbone, celle-ci est densifiée par un processus de type CVI (étape 16 de la figure 1). Des processus de densification de type CVI pour former des matrices en carbone ou en céramique sont bien connus.

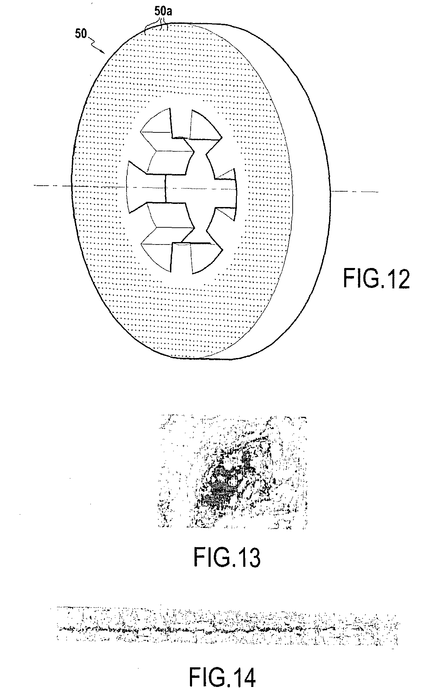

La figure 12 montre un disque de frein 50 tel qu'il peut être obtenu après densification de la préforme de la figure 7 et usinage final. Des trous 50a peuvent rester apparents et même ne pas avoir été intégralement bouchés lors de la densification dès lors qu'ils n'affectent pas les propriétés tribologiques et de résistance à l'usure du disque, en particulier s'ils sont suffisamment petits pour être très rapidement bouchés par des particules d'usure.

Au moins dans certains cas, le procédé selon l'invention peut permettre d'atteindre un degré de densification souhaité sans écroûtage intermédiaire de la pièce. Toutefois, selon l'épaisseur de la pièce à réaliser et la densité finale souhaitée, un tel écroûtage pourra être réalisé.

On notera que la possibilité qu'une étape de densification partielle par un processus de type CVI soit suivie d'une étape finale de densification par un processus autre qu'un processus de type CVI n'est pas exclue dans le cadre de la présente invention. Une telle étape finale peut par exemple consister en une étape de siliciuration par imprégnation par du silicium en fusion après formation d'une matrice carbone.

### Exemple 1

On a réalisé des préformes en fibres de carbone pour des disques de frein aéronautique de la façon suivante :
- formation de nappes nD en fibres de PAN préoxydé par nappage et aiguilletage léger de 3 nappes UD faisant entre elles des angles de ± 60° ;
- formation d'un substrat fibreux 3D par superposition et aiguilletage entre elles de strates obtenues à partir des nappes nD formées, selon le procédé du document US 5 792 715 ;
- découpe de parties en forme de disques dans le substrat fibreux 3D ; et
- carbonisation des parties découpées pour obtenir des préformes fibreuses en fibres de carbone en forme de disques.

Une préforme ainsi obtenue a été densifiée par CVI par une matrice carbone de façon conventionnelle par un processus comprenant un premier cycle de densification de 500 h, un écroûtage et un deuxième cycle de densification de 75 h.

D'autres préformes ainsi obtenues après le stade de carbonisation ont été percées de trous au moyen d'un montage tel que celui de la figure 2 en utilisant des aiguilles à barbes à section travaillante triangulaire telles que celle de la figure 3 fournies par la société Groz Beckert sous la référence 15 x 18 x 20 x 3,5 R333 G 3012 ayant 3 barbes par arête. Les aiguilles ont été montées sur une planche à aiguilles avec un pas de 20 mm. La distance de pénétration a été réglée pour traverser l'intégralité de l'épaisseur de la préforme en faisant saillie de 1 mm dans la couche d'embase. On a réalisé des trous à partir de chaque face avec une densité d'un trou tous les 5 mm sur chaque face soit une densité de 4 trous/cm², par déplacement de la platine portant la préforme.

La figure 13 montre l'ouverture d'un trou formé. Celui-ci a une forme sensiblement ovale. Alors que les aiguilles utilisées ont une section travaillante en forme de triangle équilatéral ayant une hauteur égale à environ 1 mm, on constate que les trous formés ont une dimension moyenne en section transversale d'environ 350 microns. La figure 14 montre une section longitudinale d'un trou formé. On constate que celui-ci s'étend jusqu'à proximité de la face de la préforme opposée à celle à travers laquelle les aiguilles ont été introduites, mais sans traverser toute la préforme, la partie terminale des aiguilles n'étant pas efficace pour la formation d'un trou durable.

Une préforme ainsi percée a été densifiée par une matrice carbone par le même processus CVI que celui utilisé pour la préforme non percée, mais en réalisant un seul cycle de densification de 500 h.

Les préformes densifiées ont ensuite été usinées aux dimensions finales d'un disque annulaire stator central pour frein à disques aéronautique

(épaisseur de 24,5 mm, diamètre intérieur de 248,85 mm et diamètre extérieur de 418,75 mm).

Le tableau ci-dessous montre les résultats obtenus.

| | Préforme non percée | Préforme percée |
|---|---|---|
| Densité après 500 h | 1,69 | 1,78 |
| Ecroûtage | oui | non |
| Complément de densification de 75 h | oui | non |
| Densité finale après usinage | 1,75 | 1,77 |

De façon remarquable, une densité finale a été obtenue avec la préforme percée un peu supérieure à celle obtenue avec la préforme non percée, sans écroûtage et se limitant au premier cycle de densification. L'économie réalisée au cours de la densification est considérable et bien supérieure au surcoût du perçage de la préforme, le procédé selon l'invention permettant de former rapidement et simplement plusieurs centaines de trous à la fois.

### Exemple 2

On a réalisé des préformes en fibres de carbone pour des disques de frein aéronautique comme dans l'exemple 1, certaines préformes étant destinées à la réalisation de disques rotors, d'autres préformes étant destinées à la réalisation de disques stators latéraux et d'autres encore préformes étant destinées à la réalisation de disques stators centraux (un frein comprenant un empilement de disques alternativement stators et rotors).

Des préformes pour chaque type de disque ont été soumises aux traitements suivants :
(A) formation de trous au moyen d'aiguilles telles que celles utilisées dans l'exemple 1 à raison de 4 trous/cm² à partir de chacune des faces avec une pénétration telle que l'extrémité des aiguilles fait saillie sur une longueur de 6,63 mm afin que la première barbe traverse toute la préforme et sorte sur la face opposée,
(B) formation de trous comme en (A), mais avec une densité de 2 trous/cm² à partir de chacune des faces,
(C) formation de trous à partir d'une seule face par jet d'eau sous pression comme décrit dans le document WO 2006/129040 avec une buse ayant un diamètre de sortie de 0,12 mm, la densité de trous étant de 1 trou/cm²,
(D) formation de trous comme en (C), mais avec une buse ayant un diamètre de sortie de 0,20 mm,
(E) formation de trous par laser à partir d'une seule face en utilisant un laser CO₂ de 3,5 kW de puissance et une durée d'impulsion laser de 0,1 s, la densité de trous étant de 1 trou/cm²,
(F) pas de formation de trous.

Les préformes munies de trous et non percées ont été densifiées par une matrice carbone par le même processus CVI comprenant plusieurs cycles de densification d'une durée totale de 600 h, sans écroûtage intermédiaire. Après densification, les disques rotors, stators centraux et stators latéraux ont été usinés à leurs dimensions définitives, à savoir diamètres intérieurs de 281,25 mm, 248,85 mm et 248,85 mm respectivement, diamètres extérieurs de 450,85 mm, 418,75 mm et 418,75 mm respectivement, et épaisseurs de 23 mm, 24,5 mm et 20 mm, respectivement.

Le tableau I indique les valeurs moyennes de densité mesurées pour chaque lot de disques de même type dont les préformes ont subi le même traitement éventuel de formation de trous, le nombre de disques par lot étant indiqué entre parenthèses après la valeur moyenne de densité.

**Tableau I**

| | (A) | (B) | (C) | (D) | (E) | (F) |
|---|---|---|---|---|---|---|
| Disques rotors | 1,829 (10) | 1,791 (2) | 1,791 (7) | 1,81 (2) | 1,778 (10) | 1,731 (6) |
| Disques stators centraux | 1,793 (7) | 1,786 (2) | 1,771(8) | 1,795 (2) | 1,744 (7) | 1,726 (6) |
| Disques stators latéraux | 1,827(6) | 1,819 (2) | 1,89 (8) | 1,869 (2) | 1,797 (6) | 1,770 (6) |

Les densités mesurées dans le cas où des trous ont été formés dans les préformes par des aiguilles ((A) et (B)) montrent :
- une amélioration sensible par rapport aux résultats obtenus avec des préformes non trouées ((F)),
- des performances sensiblement équivalentes et souvent un peu supérieures à celles obtenues lorsque les trous sont formés par jet d'eau ((C), (D)) ou par laser (E)), mais avec une formation des trous beaucoup plus simple et rapide,
- une meilleure performance avec une densité de trous plus élevée ((A) par rapport à (B)).

### Exemple 3

On a réalisé des préformes en fibres de carbone pour disques de frein aéronautique comme dans l'exemple 2.

Des trous ont été formés dans les préformes au moyen d'aiguilles à barbes de différents types fournies par les sociétés Foster Needles Co. et Groz Beckert. Les préformes munies de trous ont été densifiées et des disques rotors, stators centraux et stators latéraux ont été usinés comme dans l'exemple 2. Le tableau II indique les valeurs de densité mesurées pour chaque type de disque, pour différents types d'aiguilles et différentes densités de trous. Les aiguilles des quatre premières lignes étaient des aiguilles de la société Foster Needle Co. ayant des hauteurs de section travaillante allant de 0,45 mm à 0,55 mm et les autres aiguilles étaient des aiguilles de la société Groz Beckert ayant des sections travaillantes de hauteurs allant de 0,7 mm à 1 mm. A titre de comparaison on a mesuré les densités moyennes de disques obtenus de la même façon à l'exception de la formation de trous dans les préformes.

**Tableau II**

| Type d'aiguilles | Densité de trous (tr) | Nombre de faces percées | disque rotor | disque stator central | Disque stator latéral |
|---|---|---|---|---|---|
| 15X18X40X3,5 RBA F20 6-2,5 B/CC | 4 tr/cm² | 2 | | | 1,754 |
| 15X18X38X3,5 RB F20 6-3 B/PL | 4 tr/cm² | 2 | | | 1,729 |
| 15X18X36X3,5 RB F20 4-3 B/CC | 4 tr/cm² | 2 | | | 1,728 |
| 15X18X36X3,5 RB F20 6-3 B/PL | 4 tr/cm² | 2 | | | 1,727 |
| 15X18X32X3,5 R 333 G3017 | 4 tr/cm² | 2 | | 1,729 | |
| 15X18X32X3,5 R 333 G3007 | 4 tr/cm² | 2 | 1,732 | 1,717 | 1,766 |
| 15X18X20X3,5 U 333 G1012 | 4 tr/cm² | 2 | | 1,737 | |
| 15X18X32X3,5 R 333 G1002 | 4 tr/cm² | 2 | | 1,740 | |
| 15X18X32X3,5 R 333 G3017 | 4 tr/cm² | 2 | 1,724 | 1,717 | 1,780 |
| 15X16X25X3,5 M 333 G3010 | 4 tr/cm² | 2 | | 1,735 | |
| 15X18X20X3,5 R 333 G3012 | 2 tr/cm² | 2 | 1,743 | | |
| 15X18X20X3,5 R 333 G3012 | 2 tr/cm² | 2 | 1,725 | | |
| 15X18X20X3,5 R 333 G3012 | 2 tr/cm² | 2 | 1,728 | 1,746 | 1,743 |
| 15X18X20X3,5 R 333 G3012 | 2 tr/cm² | 2 | 1,713 | 1,724 | 1,772 |
| 15X18X20X3,5 R 333 G3012 | 4 tr/cm² | 2 | 1,717 | 1,718 | 1,779 |
| 15X18X20X3,5 R 333 G3012 | 4 tr/cm² | 1 | 1,714 | 1,757 | 1,743 |
| 15X18X20X3,5 R 333 G3012 | 8 tr/cm² | 2 | 1,717 | 1,714 | 1,775 |
| 15X18X20X3,5 R 333 G2002 | 2 tr/cm² | 2 | | 1,734 | |
| 15X20X3,5 R 333 G1002 | 4 tr/cm² | 2 | | 1,745 | |
| | 0 | 0 | 1,675 | 1,691 | 1,736 |

On constate que la densité des disques obtenus à partir de préformes munies de trous est supérieure à celle des disques obtenus à partir de préformes non trouées mais n'est pas très dépendante du type d'aiguilles utilisé, bien que les aiguilles se distinguent non seulement par leurs sections travaillantes mais aussi par leurs nombres, formes et profondeurs de barbes.

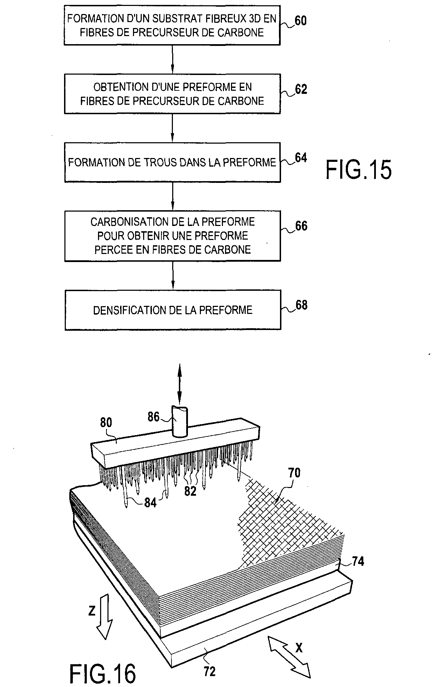

La figure 15 concerne un autre mode de réalisation du procédé selon l'invention qui se distingue du mode de réalisation décrit plus haut en référence à la figure 2 en ce que les trous sont formés au stade précurseur de carbone.

Le procédé de la figure 15 comporte successivement une étape 60 de formation d'un substrat fibreux 3D en fibres de précurseur de carbone, une étape 62 d'obtention d'une préforme en fibres de précurseur de carbone (dans la mesure où le substrat 3D ne constitue pas en soi une telle préforme), une étape 64 de formation de trous dans la préforme en fibres de précurseur de carbone, une étape 66 de carbonisation de la préforme percée en fibres de précurseur de carbone pour obtenir une préforme percée en fibres de carbone et une étape 68 de densification de la préforme percée en fibres de carbone par un processus de type CVI.

Les trous peuvent être formés dans la préforme en fibres de précurseur de carbone de la même façon que celles décrites pour le premier mode de réalisation. Toutefois, il doit être tenu compte, pour la dimension en section transversale des trous, du retrait lors de la carbonisation, les trous formés dans la préforme en fibres de précurseur de carbone devant avoir une section supérieure à celle désirée pour la préforme en fibres de carbone.

Selon une variante du deuxième mode de réalisation, les trous peuvent être formés non pas après élaboration du substrat fibreux 3D en fibres de précurseur de carbone mais lors de l'élaboration de celui-ci. Un exemple de montage convenant à cet effet est illustré par la figure 16.

Dans ce mode de réalisation, un substrat fibreux 3D en fibres de précurseur de carbone est élaboré par superposition et liaison entre elles de strates fibreuses 2D, par exemple de nappes fibreuses multidirectionnelles. La liaison des nappes entre elles est réalisée par aiguilletage au moyen d'aiguilles à barbes, au fur et à mesure de la superposition des nappes, la liaison étant réalisée par des fibres transférées transversalement par rapport aux nappes (direction Z) par l'action des aiguilles. Un tel procédé est bien connu en soi. On pourra se référer au document US 5 792 715 déjà mentionné.

Comme le montre la figure 16, le substrat fibreux 70 en cours d'élaboration est supporté horizontalement par un plateau 72 avec interposition d'une couche d'embase 74.

Une planche à aiguilles 80 porte une pluralité de premières aiguilles 82 ayant pour fonction d'assurer une liaison entre les strates du substrat par transfert de fibres et une pluralité de deuxièmes aiguilles 84 ayant pour fonction de former des trous dans le substrat. Les aiguilles 82, 84 s'étendent verticalement et la planche à aiguilles 80 est solidaire d'un organe 86 permettant d'imprimer à la planche un mouvement de translation vertical (direction Z) dans un sens et dans l'autre.

Les aiguilles 82 et 84 sont disposées en une ou plusieurs rangées s'étendant transversalement par rapport à une direction horizontale X dans laquelle le plateau 72 est mobile dans un sens et dans l'autre, une nouvelle strate étant ajoutée lorsque le plateau arrive en fin de course.

Les aiguilles 82 sont en nombre plus important que les aiguilles 84 et ont une section travaillante relativement réduite. Typiquement, pour des aiguilles à barbes ayant une section travaillante à section triangulaire, la hauteur de section est de préférence non supérieure à 0,6 mm, la fonction des aiguilles 82 étant de transférer des fibres en Z, non d'assurer la formation de trous persistants après carbonisation de la préforme.

Les aiguilles 84 sont en nombre relativement réduit et ont une longueur et une section travaillante supérieures à celles des aiguilles 82. De préférence, la longueur des aiguilles 84 est choisie au moins égale à la moitié de l'épaisseur du substrat fibreux à réaliser de manière à ménager des trous s'étendant, depuis chaque face, jusqu'au moins le plan médian du substrat. La section travaillante des aiguilles 84 est choisie suffisamment grande pour former des trous qui, après carbonisation, ont une dimension moyenne souhaitée au moins égale à 50 microns. Avec des aiguilles à barbes ayant une section travaillante triangulaire, la hauteur de la section est de préférence au moins égale à 1 mm.

Le nombre d'aiguilles 84 par rapport à celui des aiguilles 82 est choisi en fonction d'une densité de trous désirée et de la densité d'aiguilletage à réaliser par les aiguilles 82.

Le plateau 72 est mobile verticalement pour pouvoir être abaissé pas à pas au fur et à mesure de l'amenée de nouvelles strates et contrôler la densité de fibres transférées en Z dans toute l'épaisseur du substrat fibreux.

Après aiguilletage de la dernière strate, des passes d'aiguilletage de finition peuvent être réalisées, éventuellement avec des pas de descente du plateau 72, pour avoir sensiblement la même densité de trous formés par les aiguilles 84 sur chaque face du substrat.

La formation de trous simultanément avec la réalisation d'un substrat fibreux ou d'une préforme peut intervenir aussi bien lorsque le substrat fibreux ou la préforme sont obtenus à partir de fibres en précurseur de carbone que lorsqu'ils sont obtenus à partir de fibres de carbone.

En particulier, lorsque la réalisation d'un substrat fibreux ou d'une préforme directement à partir de fibres de carbone comporte une étape d'aiguilletage de strates fibreuses superposées, un montage tel que celui de la figure 16 peut être utilisé pour former les trous simultanément avec l'aiguilletage.

## Revendications

1. Procédé de fabrication d'une pièce en matériau composite ayant un renfort en fibres de carbone densifié par une matrice, le procédé comprenant les étapes de :
- réalisation d'une préforme fibreuse cohérente en fibres de carbone présentant des trous formés à partir d'au moins une première face de la préforme, et
- densification de la préforme par dépôt au sein de celle-ci d'un matériau constitutif de la matrice et obtenu par un processus du type infiltration chimique en phase gazeuse,
**caractérisé en ce que** :
- les trous sont formés par pénétration simultanée d'une pluralité d'aiguilles à barbes sensiblement parallèles entre elles et présentant à leur surface des barbes propres à sectionner une majorité des fibres rencontrées et à transférer des fibres sectionnées dans la préforme, la pénétration simultanée des aiguilles étant réalisée par déplacement d'un support portant les aiguilles, et
- les aiguilles sont choisies avec une section transversale permettant d'obtenir, dans la préforme en fibres de carbone, des trous ayant en section transversale une dimension moyenne comprise entre 50 microns et 500 microns.

2. Procédé selon la revendication 1, **caractérisé en ce que** les trous sont formés avec une densité moyenne de trous, mesurée sur ladite première face, comprise entre 0,25 trous/cm² et 16 trous/cm².

3. Procédé selon l'une quelconque des revendications 1 et 2, **caractérisé en ce que** les trous sont formés de manière à obtenir une surface ouverte mesurée sur ladite première face représentant entre 0,025 % et 2 % de la surface totale de ladite première face.

4. Procédé selon l'une quelconque des revendications 1 à 3, **caractérisé en ce que** l'on fait pénétrer les aiguilles sur une distance correspondant à au moins la moitié de la dimension de la préforme mesurée parallèlement aux trous entre ladite première face de la préforme et une face opposée à celle-ci.

5. Procédé selon l'une quelconque des revendications 1 à 4 dans lequel la réalisation de la préforme fibreuse en fibres de carbone comprend la réalisation d'un substrat fibreux cohérent en fibres de précurseur de carbone et la carbonisation du substrat fibreux pour transformer le précurseur de carbone en carbone, **caractérisé en ce que** les trous sont formés après carbonisation du substrat fibreux.

6. Procédé selon l'une quelconque des revendications 1 à 4, dans lequel la réalisation de la préforme fibreuse en fibres de carbone comprend la réalisation d'un substrat fibreux cohérent en fibres de précurseur de carbone et la carbonisation du substrat fibreux pour transformer le précurseur de carbone en carbone, **caractérisé en ce que** les trous sont formés dans le substrat fibreux avant carbonisation.

7. Procédé selon l'une quelconque des revendications 1 à 4, **caractérisé en ce que** la réalisation de la préforme fibreuse en fibres de carbone comprend la réalisation d'un substrat fibreux cohérent à partir de fibres de carbone et la formation ultérieure des trous.

8. Procédé selon l'une quelconque des revendications 1 à 4, **caractérisé en ce que** la réalisation de la préforme fibreuse en fibres de carbone comprend la réalisation d'un substrat fibreux cohérent directement à partir de fibres de carbone suivie d'une étape de carbonisation supplémentaire, et les trous sont formés dans le substrat fibreux après carbonisation supplémentaire.

9. Procédé selon l'une quelconque des revendications 1 à 4, **caractérisé en ce que** la réalisation de la préforme fibreuse en fibres de carbone comprend la réalisation d'un substrat fibreux cohérent directement à partir de fibres de carbone suivie d'une étape de carbonisation supplémentaire, et les trous sont formés dans le substrat fibreux avant carbonisation supplémentaire.

10. Procédé selon la revendication 6, **caractérisé en ce que** les trous sont formés lors de la réalisation du substrat fibreux en fibres de précurseur de carbone.

11. Procédé selon la revendication 10 dans lequel la réalisation du substrat fibreux comporte l'aiguilletage des strates fibreuses superposées **caractérisé en ce que** la formation de trous est simultanée avec l'aiguilletage, en montant sur un même support mobile une pluralité d' aiguilles (84) de formation de trous et une pluralité d'aiguilles (82) pour l'aiguilletage , distinctes des aiguilles de formation de trous.

12. Procédé selon l'une quelconque des revendications 1 à 11 pour la fabrication d'un disque de frein en matériau composite carbone/carbone, **caractérisé en ce que** la densification de la préforme fibreuse par infiltration chimique en phase gazeuse est réalisée sans procéder à un écroûtage de la surface de la préforme avant la fin de la densification.

13. Disque de frein en matériau composite à renfort en fibres de carbone, **caractérisé en ce qu'**il est obtenu par un procédé selon l'une quelconque des revendications 1 à 12.

## Claims

1. A method of fabricating a composite material part having carbon fiber reinforcement densified by a matrix, the method comprising the steps of:
· making a coherent fiber preform of carbon fibers presenting holes formed in at least a first face of the preform, and
. densifying the preform by depositing therein a material constitutive of the matrix and obtained by a chemical vapor infiltration process,
**characterized in that**:
. the holes are formed by simultaneous penetration of a plurality of barbed needles that are substantially mutually parallel and that present on their surfaces barbs suitable for breaking a majority of fibers they encounter and for transferring broken fibers within the preform, the simultaneous penetration of the needles being achieved by moving a support carrying the needles,
. and the needles are selected to have a cross-section making it possible, within the carbon fiber preform, to obtain holes having a cross-section of mean dimension lying in the range 50 µm to 500 µm.

2. A method according to claim 1, **characterized in that** the holes are formed with a mean density of holes, measured over said first face, lying in the range 0.25 holes/cm² to 16 holes/cm².

3. A method according to claim 1 or claim 2, **characterized in that** the holes are formed in order to obtain an open area measured over said first face representing 0.025% to 2% of the total area of said first face.

4. A method according to any one claims 1 to 3, **characterized in that** the needles are caused to penetrate over a distance corresponding to at least half the dimension of the preform measured parallel to the holes between the first face of the preform and a face opposite thereto.

5. A method according to any one of claims 1 to 4, in which the fiber preform of carbon fibers is made by making a coherent fiber preform out of carbon-precursor fibers and carbonizing the fiber substrate to transform the carbon precursor into carbon, **characterized in that** the holes are formed after the fiber substrate has been carbonized.

6. A method according to any one of claims 1 to 4, in which the fiber preform of carbon fibers is made by making a coherent fiber preform out of carbon-precursor fibers and carbonizing the fiber substrate to transform the carbon precursor into carbon, **characterized in that** the holes are formed in the fiber substrate before the fiber substrate is carbonized.

7. A method according to any one of claims 1 to 4, **characterized in that** the fiber preform made of carbon fibers is made by preparing a coherent fiber substrate from carbon fibers and subsequently forming the holes.

8. A method according to any one of claims 1 to 4, **characterized in that** the fiber preform made of carbon fibers is made by preparing a coherent fiber substrate directly from carbon fibers, followed by a step of additional carbonization, and the holes are formed in the fiber substrate after the additional carbonization.

9. A method according to any of claims 1 to 4, **characterized in that** the fiber preform made of carbon fibers is made by preparing a coherent fiber substrate directly from carbon fibers followed by a step of additional carbonization, and the holes are formed in the fiber substrate before the additional carbonization.

10. A method according to claim 6, **characterized in that** the holes are formed while making the fiber substrate out of carbon-precursor fibers.

11. A method according to claim 10, in which the making of the fiber substrate includes a step of needling superposed fiber plies, **characterized in that** the holes are formed simultaneously with the needling by mounting on a same movable support a plurality of holes forming needles (84) and a plurality of needling needles (82) distinct from the holes forming needles.

12. A method according to anyone of claims 1 to 11 for making a brake disk in a carbon/carbon composite material, **characterized in that** the densification of the fibrous preform by chemical vapor infiltration is achieved without any scalping step being carried out before the end of the densification.

13. A brake disk of carbon fiber reinforced composite material, **characterized in that** it is obtained by a method according to anyone of claims 1 to 12.

## Patentansprüche

1. Verfahren zur Herstellung eines Verbundwerkstoffteils mit einer durch eine Matrix verdichteten Kohlenstoffaserverstärkung, wobei das Verfahren die Schritte umfaßt:
- Ausbilden eines kohärenten Faservorformlings aus Kohlenstoffasern, der Löcher aufweist, die ausgehend von wenigstens einer ersten Seite des Vorformlings gebildet sind, und
- Verdichten des Vorformlings durch Abscheiden in ihm eines Materials, das die Matrix bildet und das mittels eines Prozesses vom Typ chemische Gasphaseninfiltration erhalten wird,
**dadurch gekennzeichnet, daß**:
- die Löcher durch gleichzeitiges Eindringen einer Vielzahl von Widerhakennadeln gebildet werden, die im wesentlichen parallel zueinander verlaufen und an ihrer Oberfläche Widerhaken aufweisen, welche in der Lage sind, einen Großteil der Fasern, auf die sie treffen, zu teilen und geteilte Fasern in dem Vorformling zu übertragen, wobei das gleichzeitige Eindringen der Nadeln durch Bewegen eines die Nadeln tragenden Trägers vollzogen wird, und
- die Nadeln mit einem Querschnitt gewählt werden, der ermöglicht, in dem Kohlenstoffaservorformling Löcher zu erhalten, die im Querschnitt eine mittlere Abmessung im Bereich zwischen 50 Mikrometern und 500 Mikrometern aufweisen.

2. Verfahren nach Anspruch 1, **dadurch gekennzeichnet, daß** die Löcher mit einer mittleren Lochdichte, gemessen auf der ersten Seite, im Bereich zwischen 0,25 Löcher/cm² und 16 Löcher/cm² gebildet werden.

3. Verfahren nach einem der Ansprüche 1 und 2, **dadurch gekennzeichnet, daß** die Löcher derart gebildet werden, daß eine auf der ersten Seite gemessene offene Fläche erhalten wird, die zwischen 0,025 % und 2 % der Gesamtfläche der ersten Seite ausmacht.

4. Verfahren nach einem der Ansprüche 1 bis 3, **dadurch gekennzeichnet, daß** man die Nadeln über einen Weg eindringen läßt, der wenigstens der Hälfte der Abmessung des Vorformlings, die parallel zu den Löchern zwischen der ersten Seite des Vorformlings und einer dieser gegenüberliegenden Seite gemessenen wird, entspricht.

5. Verfahren nach einem der Ansprüche 1 bis 4, wobei die Ausbildung des Faservorformlings aus Kohlenstoffasern die Ausbildung eines kohärenten Fasersubstrats aus Kohlenstoffvorläuferfasern sowie das Karbonisieren des Fasersubstrats, um den Kohlenstoffvorläufer in Kohlenstoff umzuwandeln, umfaßt, **dadurch gekennzeichnet, daß** die Löcher nach dem Karbonisieren des Fasersubstrats gebildet werden.

6. Verfahren nach einem der Ansprüche 1 bis 4, wobei die Ausbildung des Faservorformlings aus Kohlenstoffasern die Ausbildung eines kohärenten Fasersubstrats aus Kohlenstoffvorläuferfasern sowie das Karbonisieren des Fasersubstrats, um den Kohlenstoffvorläufer in Kohlenstoff umzuwandeln, umfaßt, **dadurch gekennzeichnet, daß** die Löcher in dem Fasersubstrat vor dem Karbonisieren gebildet werden.

7. Verfahren nach einem der Ansprüche 1 bis 4, **dadurch gekennzeichnet, daß** die Ausbildung des Faservorformlings aus Kohlenstoffasern die Ausbildung eines kohärenten Fasersubstrats aus Kohlenstoffasern sowie die nachträgliche Bildung der Löcher umfaßt.

8. Verfahren nach einem der Ansprüche 1 bis 4, **dadurch gekennzeichnet, daß** die Ausbildung des Faservorformlings aus Kohlenstoffasern die Ausbildung eines kohärenten Fasersubstrats direkt aus Kohlenstoffasern umfaßt, an die sich ein zusätzlicher Karbonisierungsschritt anschließt, und die Löcher in dem Fasersubstrat nach dem zusätzlichen Karbonisieren gebildet werden.

9. Verfahren nach einem der Ansprüche 1 bis 4, **dadurch gekennzeichnet, daß** die Ausbildung des Faservorformlings aus Kohlenstoffasern die Ausbildung eines kohärenten Fasersubstrats direkt aus Kohlenstoffasern umfaßt, an die sich ein zusätzlicher Karbonisierungsschritt anschließt, und die Löcher in dem Fasersubstrat vor dem zusätzlichen Karbonisieren gebildet werden.

10. Verfahren nach Anspruch 6, **dadurch gekennzeichnet, daß** die Löcher während der Ausbildung des Fasersubstrats aus Kohlenstoffvorläuferfasern gebildet werden.

11. Verfahren nach Anspruch 10, wobei die Ausbildung des Fasersubstrats das Vernadeln der übereinander angeordneten Faserlagen umfaßt, **dadurch gekennzeichnet, daß** die Löcherbildung gleichzeitig mit dem Vernadeln dadurch erfolgt, daß an einem gleichen beweglichen Träger eine Vielzahl von Nadeln (84) zur Bildung von Löchern und eine Vielzahl von Nadeln (82) zum Vernadeln, die sich von den Nadeln zur Bildung von Löchern unterscheiden, angebracht sind.

12. Verfahren nach einem der Ansprüche 1 bis 11, für die Herstellung einer Bremsscheibe aus Kohlenstoff/Kohlenstoff-Verbundwerkstoff, **dadurch gekennzeichnet, daß** die Verdichtung des Faservorformlings mittels chemischer Gasphaseninfiltration durchgeführt wird, ohne ein Schälen der Oberfläche des Vorformlings vor dem Ende der Verdichtung zu vollziehen.

13. Bremsscheibe aus Verbundwerkstoff mit Kohlenstoffaserverstärkung, **dadurch gekennzeichnet, daß** sie durch ein Verfahren nach einem der Ansprüche 1 bis 12 erhalten wird.
